# EUROPEAN PATENT SPECIFICATION

(11) **EP 3 073 056 B1**
(45) Date of publication and mention of the grant of the patent: **03.01.2018**
(21) Application number: 15160744.7
(22) Date of filing: 25.03.2015
(51) Int. Cl.: F01D 11/00, F02K 9/34

(54) **WIRE SEAL**
DRAHTPLOMBE
JOINT DE FIL

(43) Date of publication of application: 28.09.2016
(73) Proprietor: Ansaldo Energia IP UK Limited, London W1G 9DQ (GB)
(72) Inventor: Heaven, Sarah, Cubbington, Leamington Spa, Warwickshire CV32 7NG (GB); Tibos, Stacie, Rugby, Warwickshire CV21 3QN (GB); Justl, Sascha, 8064 Zürich (CH)
(74) Representative: Bernotti, Andrea

(56) References cited:
- EP-A1- 1 808 578
- DE-A1-102007 062 681
- US-A- 5 104 286
- US-A- 5 129 783

## Description

### TECHNICAL FIELD

The present disclosure relates to wire seals, and particularly to wire seals for sealing a gap between a picture frame and a first vane of a gas turbine.

### BACKGROUND OF THE INVENTION

In a gas turbine, there is a sealing interface between combustor outlet and the first vane of the turbine. Movement of the two parts relative to one another can be considerable, and a gap must be left between the parts to avoid contact. The gap is generally purged with cooling air. It has been appreciated that it would be advantageous to improve the design around this gap to, for example, reduce the cooling air requirements.

US5104286 discloses a seal provided to prevent the recirculation of hot gas through an annular cavity formed between the outer flow liner of a diffuser and an exhaust cylinder in the exhaust section of a gas turbine.

DE102007062681 discloses a sealing segment for sealingly connecting two structural components parts which are movable relative to one another.

US5129783 and EP1808578 relate to gas turbine engines provided with wire seals.

### SUMMARY OF THE INVENTION

The invention is defined in the appended independent claims to which reference should now be made. Advantageous features of the invention are set forth in the dependent claims.

A first aspect of the invention provides a wire seal for sealing a gap between two components of a gas turbine, the wire seal comprising a first core and a second core spaced apart from one another, a wire pack extending around the first core and the second core, and a fastener for securing the wire pack to the first core and the second core, wherein the wire seal is curved. The plate can provide extra sealing in addition to the wire pack, for example if a gap opens in the wire pack during use. The wire pack can help protect the plate, thereby increasing the lifetime of the plate in a high temperature environment. The wire seal can cope with the large relative axial and radial movements of the picture frame and first vane (first turbine vane).

The wire seal comprises a plate with a first face, a second face, a first edge comprising the first core, a second edge comprising the second core and two end edges, wherein the first edge is opposite the second edge, wherein the wire pack extends around the first face, the first edge, the second face and the second edge of the plate, and wherein the fastener secures the wire pack around the plate. The plate can improve the seal. The wire seal comprises a first core wire attached to the first edge and a second core wire attached to the second edge.

In one embodiment, the fastener comprises a first clamp for securing the wire pack to the first core and a second clamp for securing the wire pack to the second core.

In one embodiment, the fastener comprises at least one end piece attached at each end first core and the second core, to hold the wire pack in place adjacent to the first core and the second core. In one embodiment, the fastener extends around the wire pack from the first core to the second core, to hold the wire pack in place adjacent to the plate. In one embodiment, the wire seal is a conical wire seal. In one embodiment, the first core is a first core wire and the second core is a second core wire.

A second aspect of the invention provides a gas turbine comprising a wire seal as described above. In one embodiment, the gas turbine comprises a combustor and a first vane separated by a gap, and wherein the wire seal is arranged to seal the gap. Leakage reduction through this gap can thereby be achieved. In one embodiment, the combustor comprises a picture frame and wherein the gap is between the first vane and the picture frame. In one embodiment, the gas turbine comprises a socket in the picture frame, and wherein the wire seal is seated in the socket. This can hold the wire seal in place.

A third aspect of the invention provides a method according to claim 10 of manufacturing a wire seal for sealing a gap between two components of a gas turbine.

### BRIEF DESCRIPTION OF THE DRAWINGS

An embodiment of the invention will now be described by way of example only and with reference to the accompanying drawings in which:
- Figure 1: shows a perspective view of a wire seal;
- Figure 2: shows a schematic top view of the wire seal of Figure 1;
- Figures 3, 4 and 5: show cross-sections of part of a gas turbine comprising a wire seal, during different phases in gas turbine operation;
- Figure 6: shows a perspective view of another wire seal; and
- Figure 7: shows a perspective view of a further wire seal.

### DETAILED DESCRIPTION OF THE PREFERRED EMBODIMENTS

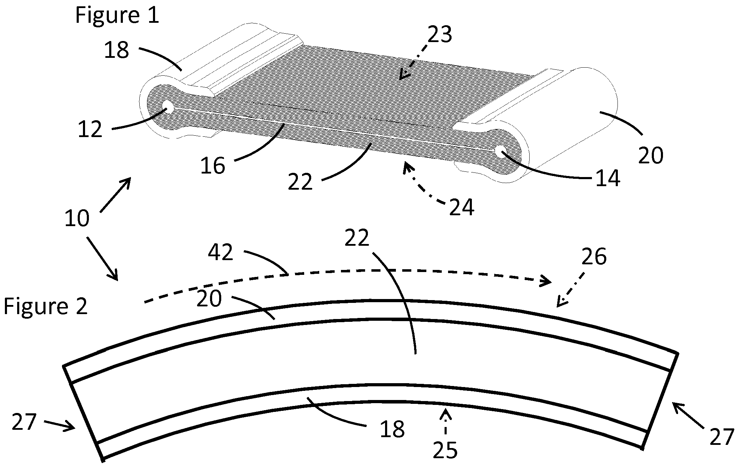

Figure 1 shows a wire seal 10 comprising a first core wire 12, a second core wire 14, a plate 16, a first clamp 18, a second clamp 20 and a wire pack 22.

The first core wire 12 is attached to one edge (a first edge) of the plate 16 and the second core wire 14 is attached to the opposite edge (a second edge) of the plate 16. The wire pack 22 extends around the first and second core wires 12, 14 and the plate 16. The wire pack is held in place by a fastener, in this case the first and second clamps 18, 20. The first clamp extends around the portion of the wire pack closest to the first core wire, with the second clamp arranged in the same way close to the second core wire. As the plate is thinner than the diameter of the first and second core wires, the effective width (the width including the plate/core wires) of the cross-section of the wire pack 22 perpendicular to the plate 16 is greater at the core wires 12, 14 than in the main portion of the wire pack 22 at the plate 16.

Figure 2 shows a top view of the wire seal 10 in Figure 1. In contrast to Figure 1, where only a short portion of seal is shown and curvature is not shown, Figure 2 shows the curvature of the wire seal 10.

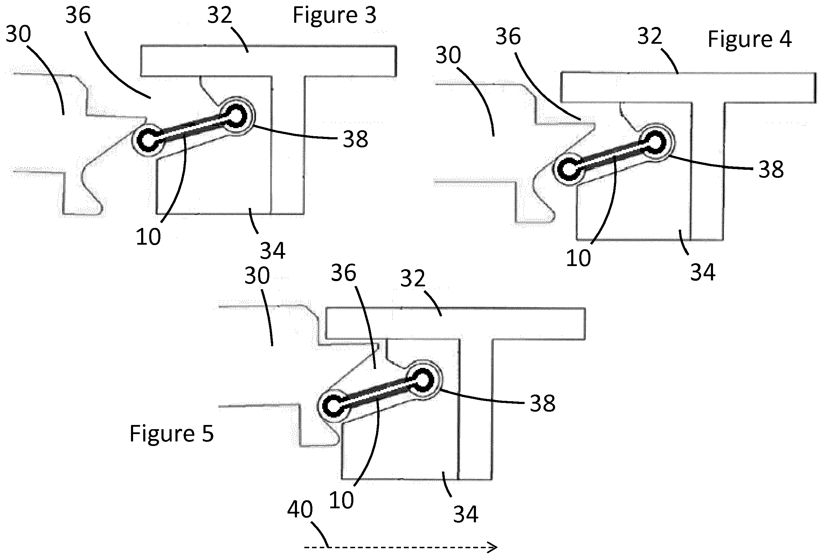

Figure 3 shows a cross-section of the wire seal 10 in a gas turbine. The gas turbine comprises a first vane 30, a picture frame 32 and a bulkhead 34. The bulkhead 34 may be an integral part of the picture frame 32 or a separate component attached to the picture frame 32, as is shown in Figure 3. The wire seal 10 extends across a gap 36 between the first vane 30 and the picture frame 32/bulkhead 34. The first clamp 18 of the wire seal 10 contacts the first vane 30, and the second clamp 20 of the wire seal 10 fits within a socket 38 in the bulkhead 34 (or in the picture frame 32).

In a gas turbine, a plurality of picture frames (sequential liner outlets) are arranged around the longitudinal axis of the gas turbine in a ring, with the picture frames typically being attached to sequential liners (combustor linings) and the sequential liners typically surrounding can combustors. The picture frames generally all intersect a plane perpendicular to the gas turbine longitudinal axis. The wire seal discussed in this application can be applied on either the inner or outer diameters of the picture frames (the edge of the picture frames closest to the gas turbine longitudinal axis). This can allow for single vane/blade assembly and/or disassembly during manufacture, maintenance and repair.

In Figure 3, the gas turbine is shown during a heating phase. In Figure 4, the gas turbine is shown in a running phase during normal operation, and in Figure 5, the gas turbine is shown in a forced cool down phase. During the different phases, the first vane 30 moves relative to the picture frame 32, varying the shape and width of the gap 36. The movement of the first vane 30 relative to the picture frame 32 includes both axial and radial movement relative to the gas turbine longitudinal axis (also the wire seal longitudinal axis, in wire seal longitudinal direction 40). It is this movement that the wire seal 10 can be designed to withstand, maintaining a seal across the gap 36.

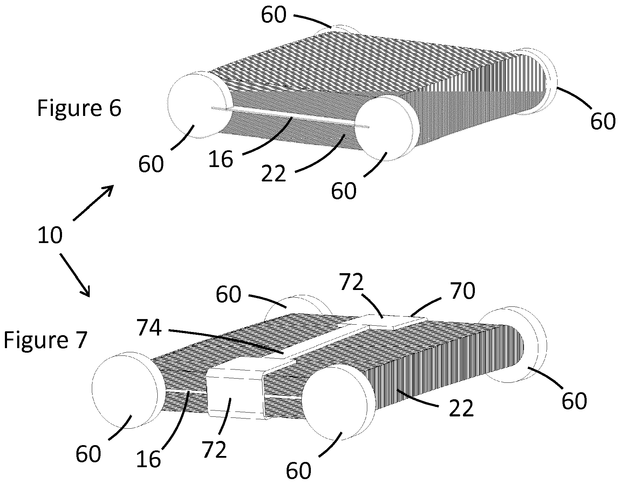

Figure 6 shows an alternative wire seal 10. As with the wire seal of Figure 1, this wire seal comprises a plate 16 and a wire pack 22, and comprise first and second core wires. The embodiment of Figure 6 comprises a fastener that differs from the fastener shown in Figure 1. In the embodiment of Figure 6, four end pieces 60 are provided as a fastener. These end pieces are attached to the four corners of the plate 16 and, as with the clamps shown in Figure 1, the end pieces 60 are arranged to hold the wire pack 22 on the plate 16. The plate 16 extends beyond the wire pack 22 at the sides to provide a surface for attachment of the clamps, although this is not essential. Similarly, slots are provided in the end pieces in which the plate is placed, and these slots are also optional. Providing a larger contact surface for the end pieces 60 on the plate 16 can allow for a better join between the end pieces 60 and the plate 16.

Figure 7 shows another alternative wire seal 10. As in Figure 6, four end pieces 60 are provided. In addition to the end pieces 60, a further fastener in the form of a central clamp is provided across the wire seal 10, extending across the wire seal 10 from one end edge of the plate to the other end edge, with the central clamp extending in the same direction as the first edge and the second edge. The central clamp comprises two central clamp end pieces 72 and at least one connecting bar 74.

In a method of manufacturing a wire seal 10 as shown in Figure 1, the first and second core wires 12, 14 are first attached to the plate 16. The wire pack 22 is then placed around the first and second core wires 12, 14 and the plate 16, for example by wrapping a wire repeatedly around the first and second core wires 12, 14 and the plate 16 to create the wire pack 16. Before the wire is wrapped around, one end of it may be attached, for example by welding, to one of the first and second core wires 12, 14 and/or the plate 16. After the wire pack 22 is in place, the first and second clamps 18, 20 are attached.

The wire that makes up the wire pack 22 is described above as being attached to another part of the wire seal before being wrapped around the plate, but one or both ends of the wire may be attached either before or after the wire is wrapped around the plate.

To manufacture the wire seal 10 as shown in Figure 6, the plate 16 is first attached to the end pieces 60 and the wire pack 22 is then placed around the plate 16, for example by wrapping a wire repeatedly around the plate 16. The end pieces 60 may alternatively be attached after the wire pack 22 is placed around the plate 16.

To manufacture the wire seal 10 as shown in Figure 7, the same method of manufacture for the embodiment in Figure 6 can again be used, with the addition of adding a central clamp. The central clamp can be added in two ways. Firstly, the central clamp can be made in pieces and joined together once it is in place around the wire pack 22, in which case the central clamp can be attached at any time after the wire pack 22 is in place. Secondly, the central clamp can be made as a single piece (or made in pieces and then assembled before attachment to the wire pack) and then slid onto the wire pack from the first edge (or from the second edge, in the case of a straight wire seal). In this case, the central clamp must be attached after the wire pack 22 is in place and before the end pieces have been attached, in embodiments such as that of Figure 7 where the end pieces have a diameter larger than the effective width of the wire pack at the point on the wire pack where the central clamp is attached (as explained in more detail below).

The wire seal 10 is described above as sealing the gap between a picture frame and a first vane of a gas turbine, but more generally the wire seal may also seal the gap between two components, for example between the first vane and another part of the combustor such as the combustor lining. The components to be sealed would normally both be static (static-to-static sealing).

The wire seal 10 may be straight as shown in the small portions shown in Figures 1, 6 and 7, or may be curved in a circumferential direction (relative to the wire seal longitudinal axis), as shown in Figure 2. A curved wire seal is preferable for the wire seals used in a gas turbine as described in Figures 3 to 5. The wire seal may also be a full ring. Generally though, multiple wire seals will be used in a ring. In one example, 20 wire seals are placed around a 360° annular joint, each extending 15° around the gas turbine circumference in the circumferential direction 42. Each picture frame around the gas turbine circumference preferably has at least one wire seal on the inner diameter (inner platform), as this can help enable single vane/blade assembly/disassembly.

The wire seal can be annular. In the case of an annular wire seal, the wire seal describes (a section of) a ring in which the first edge and the second edge are at the same distance from the gas turbine longitudinal axis (wire seal longitudinal axis); that is, the radius of curvature of the first edge and the second edge are the same. A radial wire seal could also be used, in which the second edge is further from the gas turbine longitudinal axis than the first edge and in the same plane perpendicular to the gas turbine longitudinal axis direction.

Preferably though, the wire seal is a conical wire seal. The conical wire seal has a second edge that is further from the gas turbine longitudinal axis than the first edge and in a different plane perpendicular to the gas turbine longitudinal axis direction.

For completeness, it is noted that a cone is a three-dimensional geometric shape that tapers smoothly from a flat base; the base may be circular or may be another shape. Mathematically, a conical wire seal is conical frustum, being in the shape of the surface of the frustum of a cone (i.e. a section of the cone not including the apex, also known as a truncated cone), in contrast to an annular wire seal in which the wire seal follows the shape of the surface of a cylinder.

Although most of the plate 16 is not directly visible in the Figures, the plate 16 can be described in more detail as follows, with reference to Figures 1 and 2. The plate 16 has a first face 23, a second face 24 and four edges 25, 26, 27. Of these four edges, the wire pack 22 extends around a first edge 25 and a second edge 26, the first edge 25 and the second edge 26 being opposite one another. In Figure 1, the first edge 25 and the second edge 26 are adjacent to the first core wire 12 and the second core wire 14 respectively. Two end edges 27 complete the plate 16, and it is one of these end edges 27 that is visible in Figures 1, 6 and 7. Typically, the first edge and the second edge are longer than the two end edges. Typically, the two end edges are the same length. Typically, in the case of a wire seal extending in a circumferential direction (relative to the wire seal longitudinal axis), the second edge is (slightly) longer than the first edge and the radius of curvature of the second edge is (slightly) larger than the radius of curvature of the first edge. The plate 16 may be a solid sheet or may be a mesh. In embodiments with a plate, the first core and the second core are part of the plate, at the first and second edges respectively. First and second core wires may additionally be attached to the first and second cores respectively in such cases.

The plate is preferably thinner than the diameter of the first and second core wires, but in some embodiments the plate may be the same width as or wider than the diameter of the first and second core wires. The plate and the first and second core wires are described as separate components in the examples described above, but they may be one integrated component. The core wires may also be omitted entirely, as in the embodiments of Figures 6 and 7.

The attachment between the first and second core wires and the plate 16 can be a physical attachment such as a weld..

The wire pack 22 may be made up of one or more wires repeatedly wound around the plate (and the first and second core wires in embodiments with core wires). Alternative wire packs are also possible; for example, a mesh or a chain could be wound around instead of a wire. The wire pack wire, mesh, chain or the like is typically attached at each end to stop it from unravelling, and can be attached to any appropriate part of the wire seal, for example a fastener, the plate or another part of the wire pack.

The wire pack is held on to the plate by a fastener or fasteners. Without appropriate fastening, the wire pack can unravel and/or slide off the end edges of the plate, and the clamps are designed to restrict the movement of the wire pack relative to the plate. The wire pack can also be fastened directly to the plate and/or to the clamps.

Various fasteners are described in this application, but other types of fastener and modifications to the described fasteners are possible. Any combination of the described fasteners is also possible in addition to those combinations already described. For example, the fasteners of the wire seals of Figures 1 and 6 could both be used on the same wire seal, to improve the clamping of the wire pack.

The first and second clamps 18, 20 can vary in shape but are each typically designed to encircle an end edge of the plate. The first and second clamps may be made as a spring so that the first and second clamps are in tension and are pushing on the wire pack to keep the wire pack against the plate. This can also help ensure that the first and second clamps do not slip off the wire pack, and may be particularly useful in cases without core wires. The first and second clamps could be attached to one another by one or more connecting bars extending across the surface of the wire pack (in the direction perpendicular to the first and second edges of the plate), in a similar manner to the connecting bar 74 between the central clamp end pieces 72 in the embodiment of Figure 7. The first and second clamps can also be attached to the wire pack or the plates. The first and second clamps are shown in Figure 1 with a rounded cross-section in a plane perpendicular to the first and second edges of the plate, but the clamp could also have a square or rectangular cross-section, similar to the shape of the central clamp end piece 72.

The end pieces 60 in the wire seal of Figure 6 are cylindrical with circular faces, but clamps of a different shape could be provided, such as square- or hexagonal-faced clamps. Two or more of the clamps could also be connected together; for example, the two end pieces at either end of one end edge of the plate could be connected or could be a single plate extending along part or all of the extent of the end edge.

In embodiments with first and second core wires, the end pieces can be attached to the first and second core wires and/or the plate. The first and second core wires may extend beyond the end edges of the plate, in which case holes would be provided in the end pieces to connect with the first and second core wires. This could provide a better join between the first and second core wires and the end pieces. The end pieces may additionally be attached to the wire pack.

The diameter of the end pieces in the wire seals of Figures 6 and 7 is larger than the width of the wire pack (in the direction perpendicular to the plane of the plate). Alternatively, the diameter of the end pieces may be the same as the width of the wire pack. In some embodiments the diameter of the end pieces may even be slightly smaller than the width of the wire pack, as long as the diameter of the end pieces is sufficient to hold the wire pack on to the plate. The diameter of the different end pieces may vary; for example, the two end pieces adjacent to the first edge of the plate could be smaller in diameter than the two end pieces adjacent to the second edge of the plate.

The first vane of the gas turbine may comprise one or more slots to accommodate the shape of fasteners such as end pieces 60. This can improve the seal and can also ensure that the wire seal remains in the correct place in the gap. In some of the embodiments the fastener contacts the first vane and/or the bulkhead/picture frame, and in other embodiments the wire pack contacts the first vane and/or the bulkhead/picture frame.

The central clamp 70 may be one integral part, or may be two or more parts. In the embodiment of Figure 7, the central clamp 70 is three connected parts, namely two central clamp end pieces 72 and one connecting bar 74. Various other central clamp arrangements are possible. For example, the connecting bar is narrower than the central clamp end pieces (in the direction across the seal perpendicular to the first and second edges of the plate) in the embodiment of Figure 7, but could be the same width or wider than the central clamp end pieces. The T-clamp could have more than two central clamp end pieces and/or more than one connecting bar. Subsequent connecting bars could be on the same face of the wire seal as the first connecting bar and/or on the opposite face (i.e. on the face that is not shown in Figure 7). The T-clamp could be used without any other form of fastener, or in combination with another fastener. The point of the T-clamp is generally to hold the wire pack on the plate, both so that the wire pack does not slide off the end edges and also so that the wires making up the wire pack are kept close to the faces of the plate 16. This stops the wire pack from expanding or bending away from the plate.

The picture frame 32, bulkhead 34 and first vane 30 may all vary in shape compared to the embodiments shown above, and the design can depend on variables such as the shape of the wire seal and the relative motion of the picture frame/bulkhead and the first vane.

The socket 38 in the picture frame/bulkhead is optional, and in some embodiments is not necessary. For example, a socket could alternatively be provided in the first vane to hold the wire seal in place. Sockets could also be provided on both the first vane and the picture frame/bulkhead. Other connecting components could also be provided to pivotally attach the wire seal to the first vane or the picture frame/bulkhead.

Typically, the gap is also purged with a cooling fluid such as cooling air, and there can therefore be a higher pressure on the side of the wire seal further from the hot gas path than on the side of the seal closer to the hot gas path. This pressure differential could hold the seal in place, and can also improve the quality of the seal.

The wire seals described herein are preferably for sealing gaps between two stationary parts, rather than gaps between a rotor and a stator.

Various modifications to the embodiments described are possible and will occur to those skilled in the art without departing from the invention which is defined by the following claims.

### REFERENCE SIGNS

- 10: wire seal
- 12: first core wire
- 14: second cord wire
- 16: plate
- 18: first clamp
- 20: second clamp
- 22: wire pack
- 23: first face
- 24: second face
- 25: first edge
- 26: second edge
- 27: end edge
- 30: first vane
- 32: picture frame
- 34: bulkhead
- 36: gap
- 38: socket
- 40: wire seal longitudinal direction (gas turbine longitudinal direction)
- 42: circumferential direction
- 60: end piece
- 70: central clamp
- 72: central clamp end piece
- 74: connecting bar

## Claims

1. A wire seal (10) for sealing a gap (36) between two components of a gas turbine, the wire seal (10) comprising
- a first core (12, 25) and a second core (14, 26) spaced apart from one another,
- a wire pack (22) extending around the first core and the second core, and
- a fastener for securing the wire pack to the first core and the second core,
- wherein the wire seal (10) is curved;
the wire seal (10) comprising a plate with a first face (23), a second face (24), a first edge (25) comprising the first core, a second edge (26) comprising the second core and two end edges (27), wherein the first edge (25) is opposite the second edge (26),
- wherein the wire pack (22) extends around the first face (23), the first edge (25), the second face and the second edge (26) of the plate (16), and
- wherein the fastener (18, 20, 60, 70) secures the wire pack (22) around the plate (16);
**characterised in that** the first and second core being a first and a second core wire; the first core wire (12) being attached to the first edge (25) and the second core wire (14) being attached to the second edge (26).

2. The wire seal (10) of claim 1, wherein the fastener comprises a first clamp (18) for securing the wire pack (22) to the first core and a second clamp (20) for securing the wire pack (22) to the second core.

3. The wire seal (10) of claim 1, wherein the fastener comprises at least one end piece (60) attached at each end of the first core and the second core, to hold the wire pack (22) in place adjacent to the first core and the second core.

4. The wire seal (10) of claim 1, wherein the fastener extends around the wire pack (22) from the first core to the second core, to hold the wire pack (22) in place adjacent to the plate (16).

5. The wire seal (10) of any of claims 1 to 4, wherein the wire seal (10) is a conical wire seal.

6. A gas turbine comprising the wire seal (10) of any of claims 1 to 5.

7. The gas turbine of claim 6, comprising a combustor and a first vane (30) separated by a gap (36), and wherein the wire seal (10) is arranged to seal the gap (36).

8. The gas turbine of claim 7, wherein the combustor comprises a picture frame (32) and wherein the gap (36) is between the first vane (30) and the picture frame (32).

9. The gas turbine of claim 7, comprising a socket (38) in the picture frame (32), and wherein the wire seal (10) is seated in the socket (38).

10. A method of manufacturing a wire seal (10) as claimed in any one of the foregoing claims from 1 to 7 for sealing a gap (36) between two components of a gas turbine, the method comprising the steps of:
- attaching the first and the second core wire to the first and second edge (25, 26) of the plate (16);
- placing the wire pack (22) around the plate (16) and
- fastening the wire pack (22) to the plate (16) with the fastener (18, 20, 60, 70).

## Patentansprüche

1. Drahtdichtung (10) zum Abdichten eines Spalts (36) zwischen zwei Bauteilen einer Gasturbine, welche Drahtdichtung (10) enthält:
- einen ersten Kern (12, 25) und einen zweiten Kern (14, 26), die voneinander beabstandet sind,
- eine Drahtpackung (22), die sich um den ersten Kern und den zweiten Kern erstreckt, und
- ein Befestigungsmittel zum Befestigen der Drahtpackung an dem ersten Kern und dem zweiten Kern,
- wobei die Drahtdichtung (10) gekrümmt ist;
wobei die Drahtdichtung (10) eine Platte mit einer ersten Fläche (23), einer zweiten Fläche (24), einem ersten Rand (25), der den ersten Kern aufweist, einem zweiten Rand (26), der den zweiten Kern aufweist, und zwei Stirnrändern (27) aufweist, wobei der erste Rand (25) dem zweiten Rand (26) gegenüberliegt,
- wobei die Drahtpackung (22) um die erste Fläche (23), den ersten Rand (25), die zweite Fläche und den zweiten Rand (26) der Platte (16) verläuft und
- wobei das Befestigungsmittel (18, 20, 60, 70) die Drahtpackung (22) um die Platte (16) befestigt;
**dadurch gekennzeichnet, dass** der erste und der zweite Kern ein erster und ein zweiter Kerndraht sind; wobei der erste Kerndraht (12) an dem ersten Rand (25) angebracht ist und der zweite Kerndraht (14) an dem zweiten Rand (26) angebracht ist.

2. Drahtdichtung (10) nach Anspruch 1, wobei das Befestigungsmittel eine erste Klammer (18) zum Befestigen der Drahtpackung (22) an dem ersten Kern und eine zweite Klammer (20) zum Befestigen der Drahtpackung (22) an dem zweiten Kern umfasst.

3. Drahtdichtung (10) nach Anspruch 1, wobei das Befestigungsmittel mindestens ein Endstück (60) umfasst, das an jedem Ende des ersten Kerns und des zweiten Kerns angebracht ist, um die Drahtpackung (22) an den ersten Kern und den zweiten Kern angrenzend in ihrer Position zu halten.

4. Drahtdichtung (10) nach Anspruch 1, wobei das Befestigungsmittel von dem ersten Kern zu dem zweiten Kern um die Drahtpackung (22) verläuft, um die Drahtpackung (22) an die Platte (16) angrenzend in ihrer Position zu halten.

5. Drahtdichtung (10) nach einem der Ansprüche 1 bis 4, wobei die Drahtdichtung (10) eine konische Drahtdichtung ist.

6. Gasturbine, enthaltend die Drahtdichtung (10) nach einem der Ansprüche 1 bis 5.

7. Gasturbine nach Anspruch 6, enthaltend eine Brennkammer und eine erste Schaufel (30), die durch einen Spalt (36) getrennt sind, wobei die Drahtdichtung (10) so angeordnet ist, dass sie den Spalt (36) abdichtet.

8. Gasturbine nach Anspruch 7, wobei die Brennkammer einen Bilderrahmen (32) aufweist und wobei der Spalt (36) zwischen der ersten Schaufel (30) und dem Bilderrahmen (32) ist.

9. Gasturbine nach Anspruch 7, enthaltend eine Fassung (38) in dem Bilderrahmen (32), wobei die Drahtdichtung (10) in der Fassung (38) sitzt.

10. Verfahren zur Herstellung einer Drahtdichtung (10) nach einem der vorstehenden Ansprüche von 1 bis 7 zum Abdichten eines Spalts (36) zwischen zwei Bauteilen einer Gasturbine, welches Verfahren die Schritte enthält:
- Anbringen des ersten und des zweiten Kerndrahts an dem ersten und dem zweiten Rand (25, 26) der Platte (16);
- Anordnen der Drahtpackung (22) um die Platte (16) und
- Befestigen der Drahtpackung (22) an der Platte (16) mit dem Befestigungsmittel (18, 20, 60, 70).

## Revendications

1. Joint de fil (10) pour sceller un espace (36) entre deux composants d'une turbine à gaz,
le joint de fil (10) comprenant :
un premier noyau (12, 25) et un second noyau (14, 26) espacés l'un de l'autre,
un enroulement de fil (22) s'étendant autour du premier noyau et du second noyau, et
une fixation pour fixer l'enroulement de fil sur le premier noyau et le second noyau,
dans lequel le joint de fil (10) est incurvé ;
le joint de fil (10) comprenant une plaque avec une première face (23), une seconde face (24), un premier bord (25) comprenant le premier noyau, un second bord (26) comprenant le second noyau et deux bords d'extrémité (27), dans lequel le premier bord (25) est opposé au second bord (26), dans lequel l'enroulement de fil (22) s'étend autour de la première face (23), le premier bord (25), la seconde face et le second bord (26) de la plaque (16), et dans lequel la fixation (18, 20, 60, 70) fixe l'enroulement de fil (22) autour de la plaque (16) ;
**caractérisé en ce que** les premier et second noyaux sont une première et une seconde armature ; la première armature (12) étant fixée au premier bord (25) et la second armature (14) étant fixée au second bord (26).

2. Joint de fil (10) selon la revendication 1, dans lequel la fixation comprend un premier collier (18) pour fixer l'enroulement de fil (22) au premier noyau et un second collier (20) pour fixer l'enroulement de fil (22) au second noyau.

3. Joint de fil (10) selon la revendication 1, dans lequel la fixation comprend au moins une pièce d'extrémité (60) fixée à chaque extrémité du premier noyau et du second noyau, pour maintenir l'enroulement de fil (22) en place, de manière adjacente au premier noyau et au second noyau.

4. Joint de fil (10) selon la revendication 1, dans lequel la fixation s'étend autour de l'enroulement de fil (22) du premier noyau au second noyau, pour maintenir l'enroulement de fil (22) en place, de manière adjacente à la plaque (16).

5. Joint de fil (10) selon l'une quelconque des revendications 1 à 4, dans lequel le joint de fil (10) est un joint de fil conique.

6. Turbine à gaz comprenant le joint de fil (10) selon l'une quelconque des revendication 1 à 5.

7. Turbine à gaz selon la revendication 6, comprenant une chambre de combustion et une première pale (30) séparée par un espace (36), et dans lequel le joint de fil (10) est agencé pour sceller l'espace (36).

8. Turbine à gaz selon la revendication 7, dans laquelle la chambre de combustion comprend un cadre (32) et dans laquelle l'espace (36) est entre la première pale (30) et le cadre (32).

9. Turbine à gaz selon la revendication 7, comprenant une douille (38) dans le cadre (32), et dans laquelle le joint de fil (10) est installé dans la douille (38).

10. Procédé pour fabriquer un joint de fil (10) selon l'une quelconque des revendications 1 à 7, pour sceller un espace (36) entre deux composants d'une turbine à gaz, le procédé comprenant les étapes consistant à :
fixer la première et la seconde armature aux premier et second bords (25, 26) de la plaque (16) ;
placer l'enroulement de fil (22) autour de la plaque (16), et
fixer l'enroulement de fil (22) sur la plaque (16) avec la fixation (18, 20, 60, 70).
